Europäisches Patentamt

European Patent Office

Office européen des brevets

(11) Veröffentlichungsnummer: **0 344 739 B1**

(12) **EUROPÄISCHE PATENTSCHRIFT**

(45) Veröffentlichungstag der Patentschrift: **01.09.93**

(21) Anmeldenummer: **89109802.2**

(22) Anmeldetag: **31.05.89**

(51) Int. Cl.⁵: **G02F 7/00**

(54) Opto-elektronischer A/D-Wandler mit einer Mehrzahl parallel geschalteter Lichtwellenleiter-Interferometer.

(30) Priorität: **03.06.88 DE 3818865**

(43) Veröffentlichungstag der Anmeldung:
**06.12.89 Patentblatt 89/49**

(45) Bekanntmachung des Hinweises auf die Patenterteilung:
**01.09.93 Patentblatt 93/35**

(84) Benannte Vertragsstaaten:
**DE FR GB**

(56) Entgegenhaltungen:

**ELECTRONICS LETTERS, Band 18, Nrs. 25/26, Dezember 1982, Seiten 1099-1100; G.D.H. KING et al.: "Analogue-to-digital conversion using integrated electro-optic interferometers"**

**IEEE JOURNAL OF OUANTUM ELECTRONICS, Band OE-18, Nr. 12, Dezember 1982, Seiten 2009-2015; A. NEYER et al.: "Dynamics of electrooptic bistable devices with delayed feedback"**

**IEEE JOURNAL OF OUANTUM ELECTRONICS, Band OE-17, Nr. 3, März 1981, Seiten 325-331;**

**H. ITO et al.: "Analyses and experiments on integrated optical multivibrators using electrooptically controlled bistable optical devices"**

(73) Patentinhaber: **Deutsche Forschungsanstalt für Luft- und Raumfahrt**
**Linder Höhe Postfach 90 60 58**
**D-51126 Köln(DE)**

(72) Erfinder: **Fürstenau, Norbert, Dr.**
**Berliner Heerstrasse 15a**
**D-3300 Braunschweig(DE)**
Erfinder: **Watts, Christopher**
**916 Jennifer Street**
**Madison Wisconsin 53703(US)**

(74) Vertreter: **Gralfs, Harro, Dipl.-Ing.**
**Am Bürgerpark 8**
**D-38102 Braunschweig (DE)**

**Beschreibung**

Die Erfindung bezieht sich auf einen opto-elektronischen A/D-Wandler nach dem Oberbegriff des Patentanspruches 1.

Ein bekannter opto-elektronischer 4-Bit-A/D-Wandler der gattungsgemäßen Art ist aus vier integriert optischen Mach-Zehnder-Interferometern mit elektro-optischen Phasenmodulatoren aufgebaut. Die Interferometer haben einen gemeinsamen Eingang, auf den eine Laser-Lichtquelle geschaltet ist. In dieser Anordnung ist jedem Bit des zu digitalisierenden Signals ein Interferometer zugeordnet. Das analoge Eingangssignal liegt als elektrische Spannung an den Phasenmodulatoren, die vom niedrigsten Bit (LSB) zum höchsten Bit (MSB) abnehmende Elektroden- oder Kontaktlänge haben. Die Länge ist jeweils so bemessen, daß die vier von den Photodioden an den Interferometerausgängen registrierten Interferenzsignale (Hell/dunkel-Zustände der Lichtintensität) die analoge Eingangsspannung im Gray-Code repräsentieren (Z-Electronic Letters, 9. Dezember 1982, Vol. VL.18.NO.25, S. 1099-1100).

Es ist weiter ein elektro-optisch multistabiles Element bekannt, bei dem es sich um einen konventionellen Fabry-Perot-Resonator mit einem elektro-optischen Kristall als Phasenmodulator zwischen den Spiegeln handelt. Die optische Resonatorlänge wird durch eine an den Modulator angelegte Spannung über den elektro-optischen Effekt gesteuert. Durch Rückkopplung des transmittierten Signals auf den Modulator wird diese Anordnung multistabil, d. h. eine kontinuierlich veränderte, in den Resonator eingestrahlte Eingangslichtleistung erzeugt ein sich stufenweise änderndes diskretes transmittiertes Ausgangssignal. In der zitierten Arbeit wurden 14 stabile Stufen erzeugt (Z-Optical Engineering 19(4) (1980), S. 456).

Es sind weiter Untersuchungen über das bistabile Verhalten und Mulivibratoreigenschaften eines integriert optischen Mach-Zehnder-Interferometer mit Rückkopplung auf elektro-optische Phasenmodulatoren bekannt (Z-IEEE J. Quantum Electron. QE 18 (12) (1982), S. 2009).

Zur on-line-Verarbeitung von Meßwerten mit elektronischen Rechenmaschinen werden Analog-zu-Digital-Wandler (ADC's) benötigt. Diese konvertieren ein analoges, zeitabhängiges Meßsignal in festen Zeitintervallen in ein diskretisiertes Ausgangssignal, wobei den einzelnen Meßwerten binär kodierte Worte von typischerweise 8 bis 16 Bit Länge zugeordnet werden. Zur Minimierung des bei der Digitalisierung eintretenden Informationsverlustes sollte die Taktfrequenz möglichst hoch und die Bitlänge der Worte für die einzelnen Meßwerte möglichst groß sein.

Für die Konvertierung optischer Signale, wie sie von den seit einigen Jahren entwickelten Lichtwellenleiter-(Glasfaser-)sensoren geliefert werden, wäre es von Vorteil, wenn auch die Analog-Digital-Wandlung optisch oder elektro-optisch durchgeführt werden könnte.

Im Gegensatz zur konventionellen binären Kodierung mit bistabilen elektronischen Flip-Flops eröffnet die (elektro-)optische Multistabilität die Möglichkeit einer mehrwertigen Kodierung, eine Perspektive, die auch im Hinblick auf eine zur Zeit diskutierte mehrwertige Logik in optischen Rechnern von Interesse ist. Eine mehrwertige Kodierung führt zur Reduzierung der Anzahl der für die Wandlung erforderlichen Bausteine des ADC's. Die Verwendung integriert elektro-optischer Modulatoren mit Frequenzbandbreiten im GHz-Bereich läßt außerdem sehr hohe Abtastfrequenzen möglich erscheinen.

Aufgabe der Erfindung ist es, einen Weg aufzuzeigen, mit einem opto-elektronischen A/D-Wandler der gattungsgemäßen Art sich kontinuierlich ändernde Eingangssignale im Form von Lichtintensitäten oder elektrischen Spannungen fortlaufend in diskrete Ausgangszustände umzuwandeln und diese direkt binär oder unter Ausnutzung der Multistabilität zum Beispiel auch hexadezimal oder dezimal kodiert auszugeben.

Diese Aufgabe wird gemäß der Erfindung gelöst durch die im Kennzeichend des Patentanspruches 1 herausgestellten Merkmale.

Zweckmäßige Ausgestaltungen sind Gegenstand der Unteransprüche.

Die Erfindung ist in der Zeichnung beispielsweise veranschaulicht und im Nachstehenden im einzelnen anhand der Zeichnung beschrieben.

Fig. 1 zeigt schematisch als Basiselement eines optischen ADC ein faseroptisches Michelson-Interferometer mit seiner Beschaltung.

Figur 2 zeigt ein Diagramm einer typischen Hysteresekurve mit den stationären Werten der Ausgangsintensitäten als Funktion des Proportionalitätsfaktors.

Figur 3 zeigt schematisch ein Element eines A/D-Wandlers, der mit einer variablen Lichtintensität beaufschlagt wird.

Figur 4 zeigt in gleicher Darstellung wie in Figur 3 ein Element eines A/D-Wandlers, der mit einer variablen Eingangsspannung beaufschlagt wird.

Figur 5 zeigt eine Prinzip-Darstellung eines A/D-Wandlers mit drei parallelen multistabilen Interferometern und dezimaler Kodierung.

Der im folgenden beschriebene ADC besteht aus einem System miteinander verkoppelter multistabiler Interferometer als ADC-Grundbausteinen, wobei für den Aufbau Lichtwellenleiter in Form von Monomode-Glasfasern oder auf der Basis integrierter Optik Verwendung finden.

Das Basiselement des optischen ADC ist ein Michelson- oder Mach-Zehnder-Interferometer mit Rückkopplung des Ausgangssignals auf einen Phasenmodulator, der die optische Weglänge eines der beiden Interferometerarme beeinflußt (z. B. durch mechanische Dehnung der Glasfaser). Bild 1 zeigt dies am Beispiel eines aus Monomode-Glasfasern aufgebauten Michelson-Interferometers mit einem piezoelektrischen Phasenmodulator 26, der einen Abschnitt der Faser 14 mechanisch dehnen kann. Das Lichtbündel aus einem Laser 2 (He-Ne-oder Halbleiterlaserdiode) wird mittels einer Fokusierungsoptik 6 (z. B. Mikroskopobjektiv) in den Eingangsarm 8 des Interferometers eingekoppelt. Der optische Isolator 4 unterdrückt Rückreflexe in den Laser, die zu Instabilitäten führen können. Die Eingangslichtwelle wird im faseroptischen Strahlteiler 10 (3 dB-Koppler) zu je 50 % in den Referenzarm 12 und Signalarm 14 eingekoppelt, wo die Teilwellen von den verspiegelten Endflächen 16 und 18 zum Strahlteiler 10 zurückreflektiert werden. Die Überlagerung im Strahlteiler ergibt ein Interferenzsignal in Form einer Ausgangslichtleistung P±, die von der optischen Wegdifferenz zwischen beiden Interferometerarmen abhängt. Das Interferenzsignal P+ wird am Ausgangstor 20 des Interferometers von einer Photodiode 22 mit Konversionsfaktor k in eine proportionale Spannung umgewandelt, und liegt mit einer Zeitkonstanten $\tau$ nach einer Verzögerungszeit T um einen Faktor g verstärkt (Verstärker 24) als Steuerspannung U am (in diesem Beispiel piezoelektrischen) Phasenmodulator 26. Die Spannung U (proportional zu $P_+$) ist gleichzeitig das Ausgangssignal dieses ADC-Bausteins. P- wird durch den optischen Isolator 4 von der Laserdiode abgeblockt.

Das stationäre Verhalten der Anordnung erhält man aus der Gleichung für die Ausgangsleistung eines Zweiarminterferometers:

$$P_{out\pm} = \frac{P_{in}T}{4(1+\mu)}[1 \pm \mu \cos(\Delta\phi + \phi_b)] \, , \qquad\qquad (1)$$

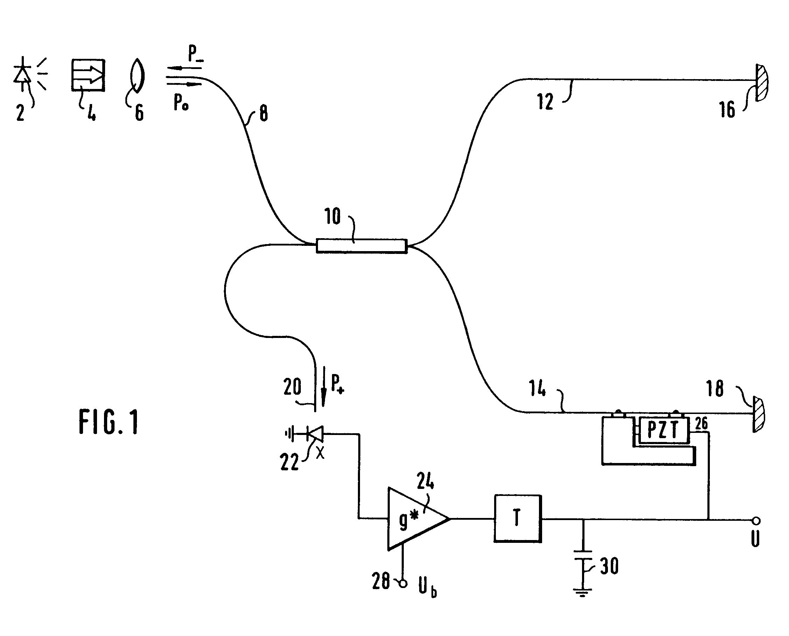

wobei der Transmissionsfaktor T und der Modulationsindex $\mu$ (Interferenzkontrast) durch die Doppelbrechung der Lichtwellenleiter, das Teilungsverhältnis (Reflektivität) des Kopplers (Strahlteilers) und die Polarisation der ein- bzw. ausgekoppelten Lichtwellen bestimmt werden. $\Phi_b$ ist ein konstanter Phasenterm, der durch eine Biasspannung $U_b$ an Klemme 28 am Phasenmodulator eingestellt werden kann. Das $\pm$ Vorzeichen entspricht der Phasenverschiebung von $\pi$ zwischen den beiden Ausgangssignalen des Interferometers. In Figur 1 wird P+ als Ausgangssignal genommen. $\Delta\Phi = \pi U(t)/U_\pi$ ist die durch den Modulator gesteuerte Phasendifferenz zwischen den beiden Interferometerarmen, und damit eine Funktion der Modulatorspannung U(t), $\Delta\Phi = \pi$ für $U = U_\pi$.

Aufgrund der Rückkopplung kann die Modulatorspannung zur Zeit t als Funktion der Lichtleistung geschrieben werden:

$$U(t) = \varkappa g P(t)_+ - \tau\frac{dU}{dt} \qquad (2)$$

Der zweite Term auf der rechten Seite berücksichtigt die endliche Zeitkonstante $\tau$ des rückgekoppelten Systems, die bei integriert optischen Modulatoren in die Größenordnung von $\tau \approx 1ns$ kommt. Bei Verwendung piezoelektrischer Modulatoren müssen wegen der mechanischen Resonanzeigenschaften dieser Elemente noch höhere Ableitungen in U berücksichtigt werden.

Durch Einsetzen von (2) in (1) erhält man eine Differenzen-Differentialgleichung, die das dynamische Verhalten eines Mach-Zehnder-oder Michelson-Interferometers mit elektro-optischer Rückkopplung beschreibt:

$$\tau\frac{du}{dt} + u(t) = \frac{G}{1+\mu}[1 + \mu \cos(\pi(u(t - T) + u_b))] \qquad (3)$$

wobei T die Rückkoppelverzögerungszeit ist (nicht zu verwechseln mit dem Transmissionsfaktor T), $G = kgP_0 T/U_\pi$ und $u(t) = U(t)/U_\pi$, $u_b = U_\pi/U$ als dimensionslose Spannungen eingeführt wurden. Glg. (3) wurde in DFVLR-Mitt. 87/21 im Hinblick auf Multistabilität untersucht. Hier interessiert in erster Linie das stationäre Verhalten. Dies wird durch die Funktionsgleichung

EP 0 344 739 B1

$$u^* = \frac{G}{1+\mu}[1,+ \mu \cos(\pi(u^* + u_b))] \tag{4}$$

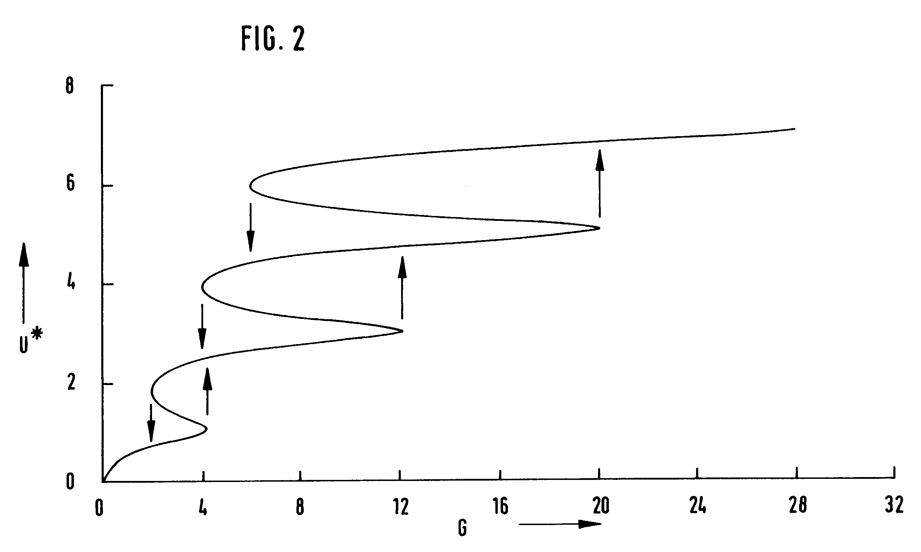

beschrieben. Figur 2 zeigt die stationären Fixpunkte u* als Funktion des Proportionalitätsfaktors G (proportional zur Eingangsleistung $P_0$ und zur Verstärkung g). Das Charakteristikum dieser Kurve ist das Hystereseverhalten der stationären Ausgangssignale u* des Systems in Abhängigkeit von G. Bei kontinuierlicher Erhöhung von $P_0$ wird das Ausgangssignal nur wenig anwachsen, bis es bei bestimmten Werten von $P_0$ auf ein höheres Niveau springt, wo sich der Vorgang wiederholt. Die Intervalle zwischen den Plateaus der dimensionslosen Ausgangsspannung betragen etwa $\Delta u^* \approx 2$. Eine Abschätzung für die digitale Auflösung des einzelnen multistabilen Elements erhält man über die relativen Maxima von G(u*), indem man den cosinus-Term in Glg. (4) mit -1 annähert:

$$\Delta G \approx 2\frac{1+\mu}{1-\mu} \tag{5}$$

Die Auflösung in G (Steigung des "Aufwärts"-zweiges der Hysteresekurve in Figur 2) wird also durch den Modulationsindex μ (Interferenzkontrast) bestimmt.

Die stationären Lösungen von Glg. (3), wie sie in Figur 2 gezeigt sind, sind nur unter bestimmten Bedingungen auch stabil (DFVLR-Mitt. 87/21, S. 243). Die Nichtlinearität des rückgekoppelten Systems führt ab gewissen G-Werten, sogenannten Bifurkationspunkten, zunächst zu periodischem und schließlich zu chaotischem Verhalten des Ausgangssignals. Die stabilen Bereiche der stationären Lösungen sind durch das Verhältnis der Rückkoppel-Verzögerungszeit T zur Modulatorzeitkonstanten $\tau$ gegeben: Je kleiner $T/\tau$, desto größer ist der G-Bereich für stabile Lösungen u*, und entsprechend mehr Sprünge in u* sind möglich (z. B. $\mu = 0,5$; $T/\tau = 10$ : 46 Sprünge im Bereich G = 0...200). Für Multistabilität muß allgemein $T/\tau \ll 1$ sein.

Faseroptische multistabile Interferometer mit Rückkopplung über einen piezoelektrischen Phasenmodulator erlauben bei geeigneter Wahl von $\tau$ (einstellbar z. B. durch eine zum PZT 26 parallelgeschaltete Kapazität 30: z. B. $\tau \approx 10^{-3}$s bei $T \approx 10\mu$s) und bei genügend kleinem Modulationsindex μ grundsätzlich sehr viele diskrete Stufen im Ausgangssignal.

Im Hinblick auf die Miniaturisierbarkeit werden für den ADC bevorzugt integriert optische Interferometer mit elektro-optischen Phasenmodulatoren verwendet. Solche Komponenten auf der Basis von LiNB-Kristallen mit Ti-diffundierten Wellenleitern sind bekannt. Ein weiterer Vorteil eines solchen integriert optischen Chips ist die über den linearen elektro-optischen Effekt ermöglichte hohe Modulationsfrequenz bis in den GHz-Bereich.

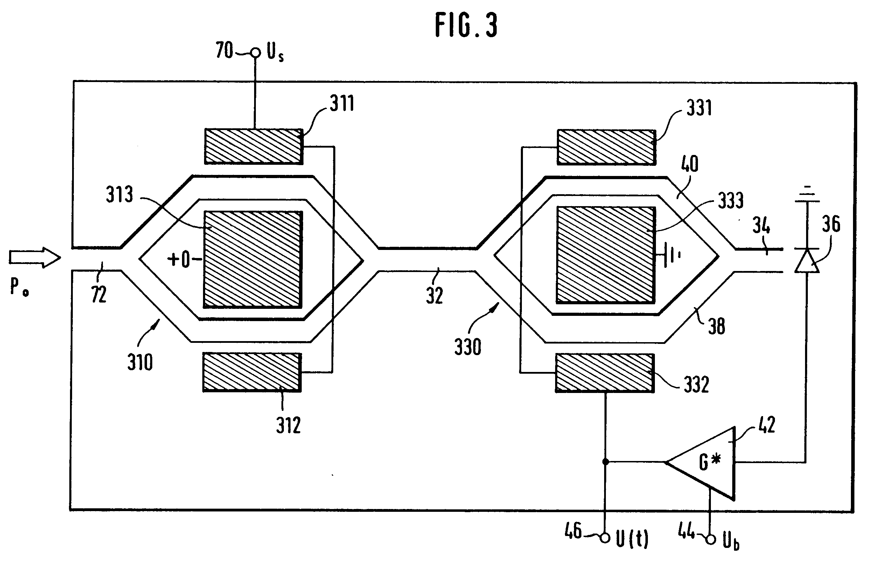

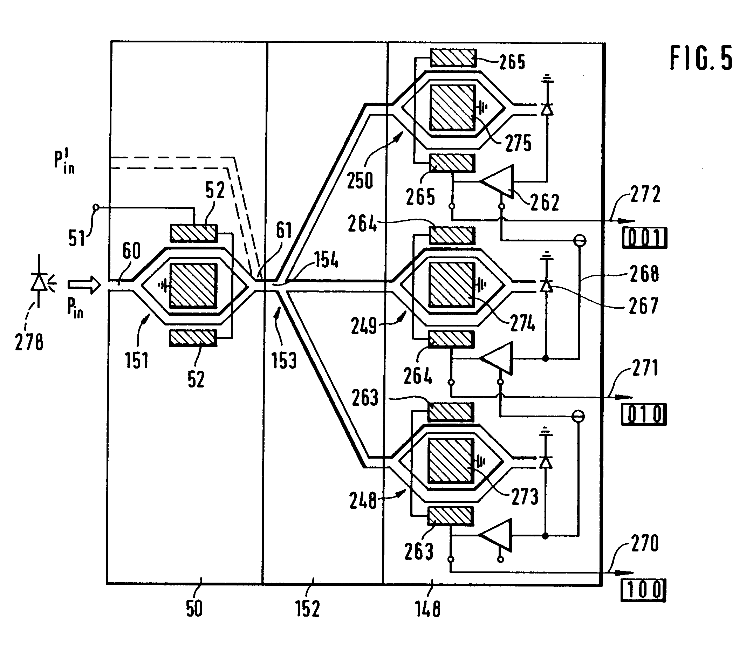

Figur 3 zeigt eine Ausführungsform eines aus zwei hintereinandergeschalteten Mach-Zehnder-Interferometern 310, 330 bestehenden Basiselementes eines opto-elektronischen ADC. Das zweite Interferometer 330 mit Eingangstor 32 und Ausgangstor 34 ist das multistabile Element, während das erste Interferometer 310 als elektrooptischer Phasenmodulator dient. Beide Interferometer 310, 330 sind über Elektroden 311, 312, 313 bzw. 331, 332, 333 steuerbar. Die Elektroden 311, 312 bzw. 331, 332 sind parallel geschaltet und mit Eingangsklemmen 70 bzw. 46 verbunden. Die Elektrode 313 liegt an einer positiven Vorspannung ( + ) während die Elektrode 333 an Masse liegt. Mit Spannungsimpulsen an der Klemme 70 wird die in Tor 72 eingekoppelte Eingangslichtleistung $P_0$ als zu digitalisierendes analoges Signal, das am Tor 32 anliegt, periodisch ausgeschaltet, um dadurch das multistabile Interferometer 330 für jede neue Digitalisierung auf 0 zu setzen. Im einzelnen wird hierauf weiter unten unter Bezug auf Figur 5 eingegangen. Dadurch werden die Sprünge im "Aufwärts"-Zweig der in Figur 2 dargestellten G-u*-Charakteristik für die Digitalisierung benutzt.

Die Übertragungscharakteristik des multistabilen Mach-Zehnder-Interferometers wird wie die des Michelson-Interferometers durch Glg (1) bis (3) beschrieben, wobei hier $P_+$ zu einer Photodiode 36 gelangt, während $P_-$ vom Substrat absorbiert wird. Das Verzweigungsverhältnis für die eingekoppelte Lichtleistung im Eingangs-Richtkoppler des zweiten, multistabilen Interferometers 330 und damit der Interferenzkontrast μ wird durch Unsymmetrie der Interferometerarme 38, 40, hervorgerufen durch ungleiche Durchmesser oder Verzweigungswinkel, bestimmt. Integration von Photodiode 36 und Verstärker 42 auf demselben Chip wie die Interferometer 310, 330 ist denkbar, aber nicht notwendig. Der Ausgang der Photodiode 36 ist einem Verstärker 42 aufgeschaltet, dessen Ausgangssignal an den beiden Elektroden 331, 332 des Interferometers 330 anliegt. An der Klemme 44 liegt die Offsetspannung $U_b$ an. An einer Klemme 46 wird das digitalisierte Ausgangssignal U abgenommen. Falls die Rückkoppel-Verzögerungszeit in dieser Anord-

4

nung aufgrund der Verzögerungen im Verstärker größer als die Zeitkonstante $\tau$ ist, muß letztere durch geeignete Maßnahmen vergrößert werden, um durch hinreichend kleines T/$\tau$ die gewünschte Zahl von stabilen Zuständen des Interferometers zu erhalten.

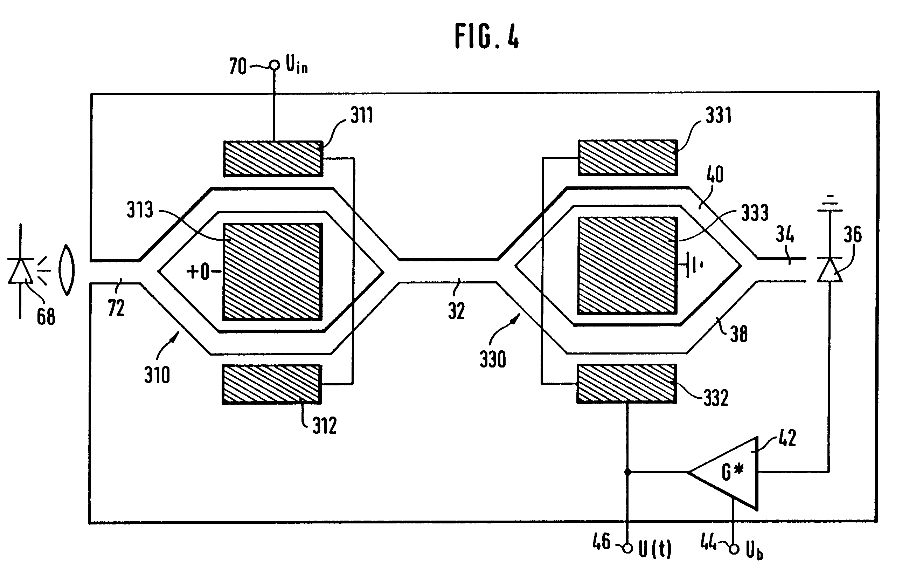

Bei den Ausführungen nach Figur 4 wird zur Digitalisierung eines elektrischen Analogsignals Licht konstanter Intensität aus einer Laserdiode 68 in das Eingangstor 72 des ersten Interferometers 310 eingekoppelt. An der Klemme 70 liegt ein elektrisches Analogsignal $U_{in}$ an. Der Ausgang des zweiten, multistabilen Interferometers 330 kann in diesem Fall z. B. durch periodisches Ausschalten der Laserdiode 68 vor jedem Meßzyklus auf 0 gesetzt werden. Für das erste Interferometer 310, das als elektro-optischer Schalter oder Modulator wirkt, ist $\mu$ = T = 1. Die Mittelelektrode 313 wird auf konstanter positiver Vorspannung (+) gehalten, so daß $\Phi_B$ = $\pi$/2 und der Arbeitspunkt somit im steilen Teil der Kennlinie liegt. Kleine Spannungsänderungen am Kontakt 70 erzeugen dann über $\Delta\Phi(U_s)$ proportionale Ausgangsleistungs-änderungen des Interferometers 310 und damit Änderungen der Eingangsleistung des multistabilen Interferometers 330.

Ein einzelnes multistabiles Interferometer, wie es vorstehend unter Bezug auf Figur 3 und 4 beschrieben ist, kann ein sich kontinuierlich änderndes Eingangssignal in diskrete Ausgangszustände (Lichtintensitäten oder elektrische Spannungen) umwandeln, wobei die maximale Anzahl theoretisch durch den Interferenzkontrast $\mu$ und die charakteristischen Zeiten des Systems bestimmt wird. In der Praxis wird die Maximalzahl stabiler Zustände außerdem durch die maximale mit dem Modulator erreichbare Phasenverschiebung begrenzt. Jeder Sprung zu einem nächsthöheren Zustand erfordert eine Phasenverschiebung von $\Delta\Phi$ = 2 $\pi$ rad.

Während mit piezoelektrischen Modulatoren in Glasfaserinterferometern über mechanische Faserdehnung hundert und mehr diskrete Zustände eingenommen werden können, erlauben elektro-optische Modulatoren nur um eine Größenordnung kleinere Maximalzahl von Sprüngen, abhängig u. a. von der Elektrodenlänge des elektro-optischen Phasenmodulators. Unter diesem Gesichtspunkt ist die Verwendung von multistabilen Michelson-Interferometern anstelle von Mach-Zehnder-Anordnungen von Vorteil, weil die Phasenverschiebung der Lichtwellen bei gleicher Modulatorspannung im ersten Fall doppelt so hoch ist.

Weil T/$\tau$ mit wachsender Zahl stabiler Zustände kleiner werden muß, reduziert sich damit zwangsläufig auch die Geschwindigkeit der Anordnung. Die schnellste Wandlung kann bei binärer Kodierung mit zwei stabilen Zuständen erreicht werden, wobei dann die Zahl aufgelöster Bits gleich der Zahl der Interferometer im ADC ist. In der Praxis wird man einen Kompromiß zwischen einer möglichst hochwertigen Kodierung und hoher Wandlungsgeschwindigkeit eingehen.

Aus den genannten Gründen erfordert der Aufbau z. B. eines 10-Bit-ADC's auch bei mehrwertiger Kodierung eine Verkopplung mehrerer multistabiler Interferometer zu einer Kaskade. Bild 5 zeigt den Aufbau eines ADC's am Beispiel von drei verkoppelten Elementen. Einem Bauelement 148 mit den kaskadierten multistabilen Elementen 248, 249, 250 vorgeschaltet ist ein Bauelement 50 mit einem elektro-optischen Schalter 151 und ein Bauelement 152 mit einem glasfaseroptischen oder integriert optischen 1 x 3 - Koppler 153, der die an seinem Eingang 154 anliegende zu digitalisierende Eingangslichtintensität gleichmäßig auf die drei Interferometer 248, 249, 250 verteilt. Alle Komponenten dieser drei Bauelemente können auf einem einzigen integriert optischen Chip untergebracht werden.

Die drei Interferometer 248, 249, 250 unterscheiden sich durch die Rückkopplungsverstärkung g und den Interferenzkontrast $\mu$. Dadurch digitalisieren die Interferometer das analoge optische Eingangssignal $P_{in}$, das am Eingangstor 60 anliegt, jeweils mit unterschiedlicher Auflösung. Die Verhältnisse $\mu_a/\mu_b/\mu_c$ und $g_a/g_b/g_c$ können z. B. so gewählt sein, daß der Analogwert im Dezimalsystem kodiert an den Ausgängen 270, 271, 272 erscheint. Dazu sind z. B. die Werte nach folgender Tabelle der möglichen Wertekombinationen für Rückkoppelverstärkung g und Modulationsindex $\mu$ eines dezimal kodierten ADC einzustellen.

| $g_a$ | $g_b$ | $g_c$ | $\mu_a$ | $\mu_b$ | $\mu_c$ |
|---|---|---|---|---|---|
| 4 | 2 | 1 | 0.500 | 0.875 | 0.974 |
| 10 | 5 | 1 | 0.400 | 0.842 | 0.918 |

Bei diesen Werten springt Interferometer 249 bei einer zehnfach und Interferometer 248 bei einer hundertfach höheren Lichtleistung als Interferometer 250 auf den nächsthöheren stabilen Zustand.

Die drei Interferometer sind elektrisch so verschaltet, daß beim Sprung eines höherwertigen Interferometers (z. B. 249) der entsprechende Spannungswert, der von der Photodiode 267 abgegeben wird, im Rückkoppelkreis 268 als Offsetspannung von der aktuellen Modulatorspannung, die über den Verstärker 262 des niedrigerwertigen Interferometers 250 an dessen parallel geschalteten Elektroden 265 anliegt, subtrahiert wird. Durch diese Verschaltung wird die Modulatorspannung der Interferometer 250 und 249 bei kontinuierlicher Erhöhung der Eingangslichtintensität $P_0$ jeweils beim zehnten Sprung auf den Anfangswert zurückgesetzt. Ein analoges Eingangssignal kann mit dieser Anordnung in maximal 999 Inkremente bei dezimaler Kodierung zerlegt werden. Die an den Elektroden anliegende Spannung wird bei jedem der drei Interferometer herausgeführt und digital angezeigt. Die dezimale Anzeige umfaßt damit den Bereich von 000 bis 999.

Bei der vorstehend beschriebenen Ausführung muß das zu digitalisierende Analogsignal aufgrund der erwähnten Hysterese-Charakteristik der multistabilen Elemente vor jedem neuen Digitalisierungsvorgang auf 0 rückgesetzt werden. Die Digitalisierung wird damit jeweils im "Aufwärts"-Hysteresezweig der Spannungs-Verstärkungs-Charakteristik (Figur 2) durchgeführt. Das Rücksetzen kann erfolgen über eine Rücksetz-(Reset-)Spannung, die über eine Reset-Anschlußklemme 51 an den Elektroden 52 des Schalters 151 periodisch getaktet angelegt wird. Es ist auch ein Rücksetzen dadurch möglich, daß die beiden parallel geschalteten Elektroden 263, 264, 265 der Interferometer 248, 249, 250 auf das Potential der jeweiligen dritten Elektrode 273, 274, 275 gelegt werden, die vorzugsweise Massepotential hat. Dadurch wird der Durchgang durch den Schalter 151 gesperrt bzw. es werden die Interferometer 248, 249 und 250 jeweils auf 0 gesetzt.

Mit einer veränderten Anordnung läßt sich auch der "Abwärts"-Hysteresezweig für die Digitalisierung ausnutzen. Dies hat den Vorteil, daß bei ansonsten gleichen Parametern ein Vielfaches an stabilen Zuständen gegenüber dem Arbeiten im "Aufwärts"-Hysteresezweig erreichbar ist. Dazu können die multistabilen Interferometer 248, 249 und 250 vor jedem Digitalisierungstakt statt auf 0 über den Schalter 151 auf maximale Eingangsintensität geschaltet werden. Zu diesem Zweck wird in den elektro-optischen Schalter 151 anstelle eines zu digitalisierenden optischen Signals eine konstante ausreichend hohe Lichtleistung (z. B. aus einer Laserdiode 278) eingekoppelt, die vor jedem Digitalisierungsvorgang ausgeschaltet wird, so daß danach nur noch der (niedrigere) Signalpegel eines analogen Eingangsignals in die multistabilen Interferometer 248, 249, 250 eintritt. Dieses analoge Eingangssignal ($P'_{in}$) kann hinter dem Schalter 151 in ein zusätzliches Eingangstor 61 für den anschließenden 2 x 3 - Koppler 153 eingekoppelt werden. Eine weitere Möglichkeit für das Rücksetzen beim Arbeiten im "Abwärts"-Hysteresezweig besteht darin, die Elektroden 263, 264, 265 der Interferometer 248, 249, 250 periodisch getaktet an einen Spannungspegel anzulegen, der höher liegt als der höchste zu erwartende Signalpegel.

Da die Steigung des "Abwärts"-Hysteresezweiges der $u^*$-G-Kennlinie (Figur 2) eines multistabilen Interferometers (d. h. seine digitale Auflösung nach Glg. (5)) im Gegensatz zur Steigung des "Aufwärts"-Zweiges nicht vom Interferenzkontrast $\mu$ abhängt, muß die unterschiedliche digitale Auflösung der verschiedenen Interferometer des ADC in diesem Fall auf andere Art eingestellt werden. Zu diesem Zweck können die einzelnen Interferometer 248, 249, 250 mit unterschiedlich langen Elektroden 263, 264, 265 an den elektro-optischen Modulatoren versehen werden. Das Interferometer mit der höchsten Auflösung enthält dabei die längsten Elektroden. Dadurch wird in Glg. (3) $U_\pi$ kleiner. Anstelle der Wertepaare (g, $\mu$) werden bei der Verwendung des "Abwärts"-Hysteresezweiges dann für die gewünschte Kodierung (binär, hexadezimal, dezimal) die Paare (g, $U_\pi$ für die einzelnen Interferometer des ADC entsprechend eingestellt.

Die Schaltung nach Figur 5 kann prinzipiell auch für die Auflösung und Anzeige analoger elektrischer Signale verwendet werden, wie sie im Prinzip unter Bezug auf Figur 4 beschrieben ist. Das Signal liegt hierbei an der Eingangsklemme 51 der Elektrode 52 des Schalters 51 an, während über das Eingangstor 60 des Schalters 151 ein periodisch getaktetes optisches Signal dem Schalter anliegt. Auch eins der übrigen vorbeschriebenen Reset-Verfahren kann verwendet werden.

**Patentansprüche**

1. Opto-elektronischer A/D-Wandler mit einer Mehrzahl parallel geschalteter Lichtwellenleither-Interferometer, die von einer einzelnen Eingangslichtquelle beaufschlagt sind, bei dem die Optischen Weglängen der Interferometerarme durch elektrische Felder zwischen parallel zu den Interferometerarmen angeordneten Elektroden (263-265, 273-275) bestimmt sind, wobei zwei der Elektroden Steuerelektroden (263-265) sind, die entlang der äußeren Längsseiten der Interferometerarme angeordnet sind, und eine dritte Elektrode (273-275) zwischen den Interferometerarmen angeordnet ist, und bei dem jedem der Interferometer eine Photodiode nachgeschaltet ist, mit der jeweils das Ausgangssignal der Interferometer in eine elektrische Spannung umgewandelt wird, die verstärkt und zur Anzeige gebracht wird, dadurch gekennzeichnet daß die Interferometer multistabile Interferometer sind, daß dem gemeinsamen Eingang (154) der Mehrzahl paralleler multistabiler Interferometer (248, 249, 250) ein gemeinsames Eingangsinterferometer (151) vorgeschaltet ist, das von der Eingangslichtquelle (278) beaufschlagt ist und parallel zu den Eingangsinterferometerarmen angeordnete Elektroden (152) aufweist, an die eine die optischen Weglängen der Eingangsinterferometerarme bestimmende elektrische Eingangsspannung (51) anlegbar ist, daß bei den parallelen Interferometern die mittels Verstärkern (262) verstärkten Ausgangsspannungen der Photodioden (267) der einzelnen Interferometer (248, 249, 249, jeweils auf deren Elektroden (263, 264, 265) geschaltet sind und die Ausgangsspannung der Photodioden eines höherwertigen Interferometers (249) zusätzlich dem Verstärker (262) des diesem gegenüber niedrigerwertigen Interferometers (250) als Offset-Spannung aufgeschaltet ist, daß die Ausgangsspannungen der einzelnen Verstärker jeweils als Digitalsignale abgegriffen werden und aus diesen das codierte Ausgangssignal gebildet wird und daß Mittel zur Erzeugung eines periodisch getakteten Rücksetz-Signals vorgesehen sind.

2.  Opto-elektronischer A/D-Wandler nach Anspruch 1, dadurch gekennzeichnet, daß das Eingangsinterferometer von einer Lichtquelle konstanter Intensität beaufschlagt ist und daß an seinen Elektroden eine analoge elektrische Spannung anliegt.

3.  Opto-elektronischer A/D-Wandler nach Anspruch 1, dadurch gekennzeichnet, daß das Eingangsinterferometer (151) von einer Lichtquelle (278) variabler Intensität beaufschlagt ist und an seinen Elektroden (52) eine getaktete Spannung zur Unterbrechung des Lichtdurchgangs anliegt.

4.  Opto-elektronischer A/D-Wandler nach Anspruch 1, dadurch gekennzeichnet, daß die parallelen Interferometer (248, 249, 250) einen durch Asymmetrie der Interferometerarme erzeugten Interferenzkontrast $\mu < 1$ aufweisen.

5.  Opto-elektronischer A/D-Wandler nach Anspruch 1, dadurch gekennzeichnet, daß die Elektroden (263, 264, 265) der parallelen Interferometer (248, 249, 250) die gleiche Länge haben.

6.  Opto-elektronischer A/D-Wandler nach Anspruch 1, dadurch gekennzeichnet, daß das durch die Elektroden (263, 264, 265) der parallelen multistabilen Interferometer (248, 249, 250) erzeugte Feld mittels eines Rücksetzsignales periodisch auf einen Ausgangswert rücksetzbar ist.

7.  Opto-elektronischer A/D-Wandler nach Anspruch 6, dadurch gekennzeichnet, daß zur Erzeugung des Rücksetzsignals Mittel vorgesehen sind, mit denen das Potential der steuerbaren Elektroden (263, 264, 265) der parallelen multistabilen Interferometer (248, 249, 250) auf das Potential der jeweils dritten Elektrode (273, 274, 275) dieser Interferometer schaltbar sind.

8.  Opto-elektronischer A/D-Wandler nach Anspruch 6, dadurch gekennzeichnet, daß zur Erzeugung des Rücksetzsignals Mittel vorgesehen sind, mit denen das Potential der steuerbaren Elektroden (263, 264, 265) der parallelen multistabilen Interferometer (248, 249, 250) auf einen Pegel anhebbar ist, der größer ist als der maximale Signalpegel des Eingangssignals des Wandlers.

9.  Opto-elektronischer A/D-Wandler nach Anspruch 6, dadurch gekennzeichnet, daß zur Erzeugung des Rücksetzsignals eine periodisch auf den gemeinsamen Eingang der parallelen multistabilen Interfero-meter wirkende Konstantlichtquelle ($P'_{in}$) vorgesehen ist, deren Lichtleistung höher ist als die des optischen Nutzsignals ($P_{in}$).

**Claims**

1.  An opto-electronic A/D converter with a plurality of parallel connected optical waveguide interferometers which are acted upon by a single input light source, the optical path lengths of the interferometer arms being defined by electrical fields between electrodes (263-265, 273-275) arranged parallel to the interferometer arms, in which two of the electrodes are control electrodes (263-265), which are arranged along the outer longitudinal edges of the interferometer arms, and a third electrode (273-275) is arranged between the interferometer arms, and a photodiode being connected after each of the interferometers, by means of which in each case the output signal of the interferometer is transformed into an electrical voltage, which is amplified and displayed, characterised in that the interferometers are multistable interferometers, that a common input interferometer (151) is connected in front of the common input (154) of the plurality of parallel multistable interferometers (248, 249, 250),the input interferometer being acted upon by the input light source (278) and having electrodes (152) arranged parallel to the input interferometer arms and to which can be applied an electrical input voltage (51) determining the optical path lengths of the input interferometer arms, that in the parallel interferometers the output voltages of the photodiodes (267) of the individual interferometers (248, 249, 250), amplified by means of amplifiers (262), are connected to their respective electrodes (263, 264, 265) and the output voltage of the photodiode of a higher value interferometer (249) is further connected as an offset voltage to the amplifier (262) of the interferometer (250) which has a relatively lower value, that the output voltages of said individual amplifiers are tapped in each case as digital signals and from these the coded output signal is formed, and that means are provided for producing a periodically clocked reset signal.

2. An opto-electronic A/D converter according to claim 1, characterised in that the input interferometer is acted upon by a light source is of constant intensity and an analog electrical voltage is applied to its electrodes.

3. An opto-electronic A/D converter according to claim 1, characterised in that the input interferometer (151) is acted upon by a light source (278) of variable intensity and to its electrodes (52) is applied a clocked voltage for interrupting the passage of light.

4. An opto-electronic A/D converter according to claim 1, characterised in that the parallel interferometers (248, 249, 250) have an interference contrast $\mu < 1$ produced by asymmetry of the interferometers.

5. An opto-electronic A/D converter according to claim 1, characterised in that the electrodes (263, 264, 265) of the parallel interferometers (248, 249, 250) have the same length.

6. An opto-electronic A/D converter according to claim 1, characterised in that the field produced by the electrodes (263, 264, 265) of the parallel multistable interferometers (248, 249, 250) may be reset periodically to a starting value by means of a reset signal.

7. An optoelectronic A/D converter according to claim 6, characterised in that, in order to produce the reset signal, means are provided, by means of which the potential of the controllable electrodes (263, 264, 265) of the parallel multistable interferometers (248, 249, 250) may be set to the potential of the respective third electrode (273, 274, 275) of said interferometers.

8. An opto-electronic A/D converter according to claim 6, characterised in that, in order to produce the reset signal, means are provided, by means of which the potential of the controllable electrodes (263, 264, 265) of parallel multistable interferometers (248, 249, 250) may be raised to a level which is greater than the maximum signal level of the input signal of the converter.

9. An opto-electronic A/D converter according to claim 6, characterised in that, in order to produce the reset signal a constant light source ($P'_{in}$) acting periodically on the common input of the parallel multistable interferometers is provided, its light output being higher than that of the optical useful signal ($P_{in}$).

**Revendications**

1. Convertisseur analogique numérique opto-électronique ayant une pluralité d'interféromètres à guides d'ondes lumineuses mis en circuit en parallèle, qui sont soumis aux effets d'une source de lumière d'entrée indépendante, dans lequel les longueurs d'ondes optiques des branches d'interféromètres, sont déterminées par des champs électriques entre des électrodes (263-265, 273-275) agencées parallèlement aux branches d'interféromètres, où deux des électrodes sont des électrodes de commande (263-265), qui sont agencées le long des côtés longitudinaux extérieurs des branches d'interféromètres, et une troisième électrode (273-275) est agencée entre les branches d'interféromètres, et dans lequel à chacun des interféromètres une photodiode est mise en circuit en aval, avec laquelle, chaque fois, le signal de sortie des interféromètres est converti en une tension électrique, qui est amplifiée et est amenée à la signalisation, caractérisé en ce que les interféromètres sont des interféromètres multistables, qu'un interféromètre d'entrée commun (151) est mis en circuit en amont à l'entrée commune (154) de la pluralité d'interféromètres multistables (248, 249, 250) parallèles, qui est soumis aux effets de la source de lumière d'entrée (278) et présente des électrodes (152) agencées parallèlement aux branches d'interféromètres d'entrée, auxquelles une tension d'entrée (51) électrique déterminant les longueurs d'ondes optiques des branches d'interféromètres d'entrée est applicable, qu'aux interféromètres parallèles, les tensions de sortie des photodiodes (262) des interféromètres indépendants (248, 249, 250) amplifiées au moyen d'amplificateurs (262) sont, chaque fois, appliquées sur leurs électrodes (263, 264, 265) et la tension de sortie des photodiodes de l'interféromètre (249) de valeur élevée est appliquée en supplément à l'amplificateur (262) de l'interféromètre (250) de valeur moindre par rapport à celui-ci, comme tension offset, que les tensions de sortie des amplificateurs indépendants, sont prélevées, chaque fois, comme signaux numériques et à partir de ceux-ci le signal de sortie codé est formé et que des moyens pour l'engendrement d'un signal de restauration rythmé périodiquement sont prévus.

2. Convertisseur analogique numérique opto-électronique selon la revendication 1, caractérisé en ce que l'interféromètre d'entrée est soumis aux effets d'une source de lumière d'intensité constante et qu'à ses électrodes est appliquée une tension électrique analogique.

3. Convertisseur analogique numérique opto-électronique selon la revendication 1, caractérisé en ce que l'interféromètre d'entrée (151) est soumis aux effets d'une source de lumière (278) d'intensité variable et qu'à ses électrodes 52) une tension rythmée est appliquée pour l'interruption du passage de lumière.

4. Convertisseur analogique numérique opto-électronique selon la revendication 1, caractérisé en ce que les interféromètres parallèles (248, 249, 250) présentent un contraste d'interférence $\mu > 1$ engendré par asymétrie des branches d'interféromètre.

5. Convertisseur analogique numérique opto-électronique selon la revendication 1, caractérisé en ce que les électrodes (263, 264, 265) des interféromètres parallèles (248, 249, 250) ont la même longueur.

6. Convertisseur analogique numérique opto-électronique selon la revendication 1, caractérisé en ce que le champ engendré par les électrodes (263, 264, 265) des interféromètres multistables (248, 249, 250) parallèles est, au moyen d'un signal de restauration, restauré périodiquement à une valeur de début.

7. Convertisseur analogique numérique opto-électronique selon la revendication 6, caractérisé en ce que des moyens sont prévus pour l'engendrement du signal de restauration, avec lesquels, le potentiel des électrodes commandables (263, 264, 265) des interféromètres multistables (248, 249, 250) parallèles sont commutables, chaque fois, sur le potentiel de la trosième électrode (273, 274, 275) de ces interféromètres.

8. Convertisseur analogique numérique opto-électronique selon la revendication 6, caractérisé en ce que des moyens sont prévus pour l'engendrement du signal de restauration, avec lequel le potentiel des électrodes commandables (263, 264, 265) des interféromètres multistables (248, 249, 250) parallèles est élevable à un niveau, qui est plus grand que le niveau de signal maximal du signal d'entrée du convertisseur.

9. Convertisseur analogique numérique opto-électronique selon la revendication 6, caractérisé en ce que pour l'engendrement du signal de restauration, une source de lumière constante ($P'_{in}$) agissant périodiquement sur l'entrée commune des interféromètres multistables, parallèles est prévue, dont la puissance lumineuse est plus élevée que celle du signal utile ($P_{in}$) optique.

FIG.1

2  4  6  $P_-$  $P_0$  8  10  12  16

20  $P_+$  14  18

22  X  24  g*  28  $U_b$  T  30  PZT  26  U

FIG. 2

EP 0 344 739 B1

# FIG.3

EP 0 344 739 B1

# FIG.4

EP 0 344 739 B1

FIG.5

EP 0 344 739 B1